# EUROPÄISCHE PATENTSCHRIFT

(11) **EP 0 950 000 B1**
(45) Veröffentlichungstag und Bekanntmachung des Hinweises auf die Patenterteilung: **29.08.2001**
(21) Anmeldenummer: 97950136.8
(22) Anmeldetag: 06.11.1997
(51) Int. Cl.: B60H 1/00, B60N 2/44

(54) **KLIMATISIERBARER FAHRZEUGSITZ**
AIR CONDITIONABLE VEHICLE SEAT
SIEGE DE VEHICULE CLIMATISABLE

(43) Veröffentlichungstag der Anmeldung: 20.10.1999
(73) Patentinhaber: WEBASTO THERMOSYSTEME GmbH, D-82131 Stockdorf (DE)
(72) Erfinder: KORTÜM, Franz-Josef, D-85276 Pfaffenhofen (DE); KEMPTER, Michael, D-80802 München (DE); HAMMERSCHMID, Günther, D-82065 Buchenhain (DE)
(74) Vertreter: Wiese, Gerhard
(86) Internationale Anmeldenummer: EP9706178
(87) Internationale Veröffentlichungsnummer: WO9924275

(56) Entgegenhaltungen:
- DE-A- 1 962 665
- DE-A- 2 524 943
- DE-U- 8 035 045
- GB-A- 2 278 432
- US-A- 5 117 638
- US-A- 5 138 851

## Beschreibung

Die vorliegende Erfindung betrifft das Gebiet des Klimakomforts in Kraftfahrzeugen. Eine standardmäßige diesbezügliche Kraftfahrzeugausrüstung stellt die herkömmliche Fahrzeugheizung dar, die es vorsieht, daß in die Fahrgastzelle geblasene Luft durch das Motorkühlmittel beheizt wird. Alternativ hierzu ist es bekannt, diese Luft über einen Wärmetauscher mittels einer Standheizung zu erwärmen. Schließlich ist es bekannt, zum Kühlen der Fahrgastzelle entweder eine Fahrzeugklimaanlage zu verwenden, die ausschließlich bei der Fahrt aktiv ist, oder alternativ hierzu eine Standklimaanlage.

Zum Klimakomfort in Fahrgastzellen eines Fahrzeugs gehört ferner die wahlweise Beheizung der Fahrzeugsitze. In den Sitz integrierte Sitzheizungen weisen elektrische Heizelemente auf, die ausschließlich im Fahrtzustand aktiv sind, weil sie relativ viel elektrische Energie verbrauchen, die im stehenden Zustand des Fahrzeugs von der Fahrzeugbatterie bezogen werden müßte.

Aus der DE-OS 25 24 943 ist eine alternative elektrische Sitzheizung bekannt, bei der ein Kühlwasser-beheiztes Heizelement nach dem Prinzip einer Gummiwärmflasche ausgebildet ist und als Wärmespender auf den Sitz- oder Lehnenflächen des Fahrzeugsitzes angebracht wird. Diese Wärmeelemente sind an den Motorküblmittelkreislauf angeschlossen, was den Nachteil mit sich bringt, daß das aggressive und giftige Kühlmittel bis in die Fahrgastzelle geleitet wird und im Falle einer Undichtigkeit in Kontakt mit einem Fahrzeugbenutzer gelangen kann.

Eine weitere Maßnahme zur Erhöhung des Klimakomforts in der Fahrgastzelle eines Fahrzeugs ist beispielsweise aus der DE PS 1962 665 bekannt, in der eine im wesentlichen aus Gummi bestehende Heizplatte beschrieben ist, die an den Motorkühlmittelkreislauf des Fahrzeugs angeschlossen ist und beispielsweise zur Fußbodenheizung in der Fahrgastzelle eingesetzt werden kann. Auch bezüglich dieses Heizelements gilt das vorstehend hinsichtlich des Kühlmittels Gesagte. Ein ähnlicher Fußbodenheizkörper ist aus dem deutschen Patent B 12059 bekannt.

Aus dem deutschen Gebrauchsmuster G 80 35 045.4 ist ein Bekleidungsstück für einen Kraftfahrzeugbenutzer bekannt, insbesondere für den Benutzer eines Arbeitsfahrzeugs oder eines sonstigen offenen Fahrzeugs, das mit einem Warmluft-führenden Kanalsystem mit Luftdurchtrittsöffnungen zu der das Bekleidungsstück tragenden Person versehen ist. Die Warmluft wird bevorzugt von einem Fahrzeugmotor-unabhängigen Warmlufterzeuger, wie beispielsweise einem Warmluftgebläse geliefert. Abgesehen von dem offensichtlich geringem Komfort dieser Maßnahme ist von Nachteil, daß der Benutzer am ganzen Körper mit Blasluft beaufschlagt wird, was bei entsprechend empfindlichen Benutzern zu gesundheitlichen Problemen führen kann. Dies gilt auch für einen weiteren bekannten Vorschlag, gemäß dem Blasluft durch einen Fahrzeugsitz auf einen Fahrzeuginsassen gelenkt wird.

Aus der GB-A-2278432 ist ein Fahrzeugsitz mit zumindest einem Kühlelement bekannt, daß optional mit einem Sekundärkreislauf eines Wärmetauschers zu Klimatisierungs-(d.h. Kühl)-Zwecken für den Fahrzeugsitz verbunden ist, wobei dem Sekundärkreislauf Wasser als Kühlmittel zugeführt wird, und wobei an die Primärseite des Wärmetauschers zumindest eine Kühleinrichtung angeschlossen ist.

Eine Aufgabe der vorliegenden Erfindung besteht darin, einen Fahrzeugsitz zu schaffen, der durch energetisch günstige Maßnahmen einen hohen Klimatisierungskomfort bereitstellt und nutzungssicher ist.

Gelöst wird diese Aufgabe durch die Merkmale des Anspruchs 1 bzw. des Anspruchs 2. Vorteilhafte Weiterbildungen der Erfindung sind in den Unteransprüchen genannt.

Alle den Ansprüchen 1 bzw. 2 entsprechenden Maßnahmen zur Erhöhung des Klimatisierungskomforts mittels eines Fahrzeugssitzes basieren auf einem Fluid zum Transport von Wärme bzw. Kälte zu einem entsprechenden Heiz- bzw. Kühl- bzw. zu einem kombinierten Heiz/Kühl-Element. das im Fahrzeugsitz eingebaut ist und an eine Wärme- bzw. Kältequelle angeschlossen ist, die im Fahrzeug zu anderweitigen Heiz- oder Kühlzwecken vorhanden ist. Eine derartige Erwärmung oder Kühlung des Fahrzeugsitzes ist energetisch günstig und im Gegensatz zu entsprechenden Vorschlägen im Stand der Technik auch insbesondere in gesundheitlicher Hinsicht unbedenklich und damit nutzungssicher, weil das entsprechende Heiz- bzw. Kühlfluid dem Sekundärkreislauf eines Wärmetauschers entnommen wird, der bevorzugt mit reinem Wasser befüllt ist, d.h. mit Wasser, das keine schädlichen Zusätze enthält.

Der Patentanspruch 1 betrifft ausschließlich die Beheizung eines Fahrzeugsitzes, und der hierfür vorgesehene Wärmetauscher ist primärseitig beispielsweise an die konventionelle Fahrzeugheizung oder an eine Standheizung angeschlossen.

Gemäß dem Vorschlag von Anspruch 2 ist ausschließlich eine Kühlung des Fahrzeugsitzes vorgesehen, und der Sekundärkreislauf des Wärmetauschers ist in diesem Fall an eine Fahrzeugklimaanlage bzw. an eine Fahrzeugstandklimaanlage angeschlossen.

In Übereinstimmung mit einer besonders vorteilhaften Ausgestaltung der Erfindung ist für jeden Lösungsvorschlag gemäß Anspruch 1 bzw. 2 eine Einrichtung zum Umschalten zwischen den verschiedenen in einem Fahrzeug vorhandenen Wärme- bzw. Kälteerzeugem vorgesehen.

Im einfachsten Fall ist das Heizelement, bzw. das kombinierte Heiz/Kühlelement für den Fahrzeugsitz an den entsprechenden eigenen Wärmetauscher des jeweiligen Wärme- bzw. Kälteerzeugers anschließbar.

Bevorzugt weisen Sitz und Lehne des Fahrzeugsitzes jeweils wenigstens ein Heiz- bzw. ein kombiniertes Heiz/Kühl-Element auf, das vorteilhafterweise im wesentlichen mäanderförmig verlegte und vom jeweiligen Fluid durchströmte Schläuche bzw. Rohre aufweist, die vorteilhafterweise in flacher Bauform verwendet werden. Diese Schläuche bzw. Rohre sind bevorzugt in ein flaches kissenförmiges Teil integriert, das in die Lehne bzw. den Sitz angrenzend an den Sitz- bzw. Lehnenbezug eingebaut ist.

Nachfolgend wird die Erfindung anhand der Zeichnung beispielhaft näher erläutert; es zeigen:
- Fig. 1: eine perspektivische Vorderansicht einer Ausführungsform des erfindungsgemäßen Fahrzeugsitzes,
- Fig. 2: eine perspektivische Rückansicht des Fahrzeugsitzes von Fig. 1, und
- Fig. 3: schematisch den Anschluß des erfindungsgemäßen Fahrzeugsitzes an die in einem Fahrzeug vorhandenen Wärme- bzw. Kälteerzeuger.

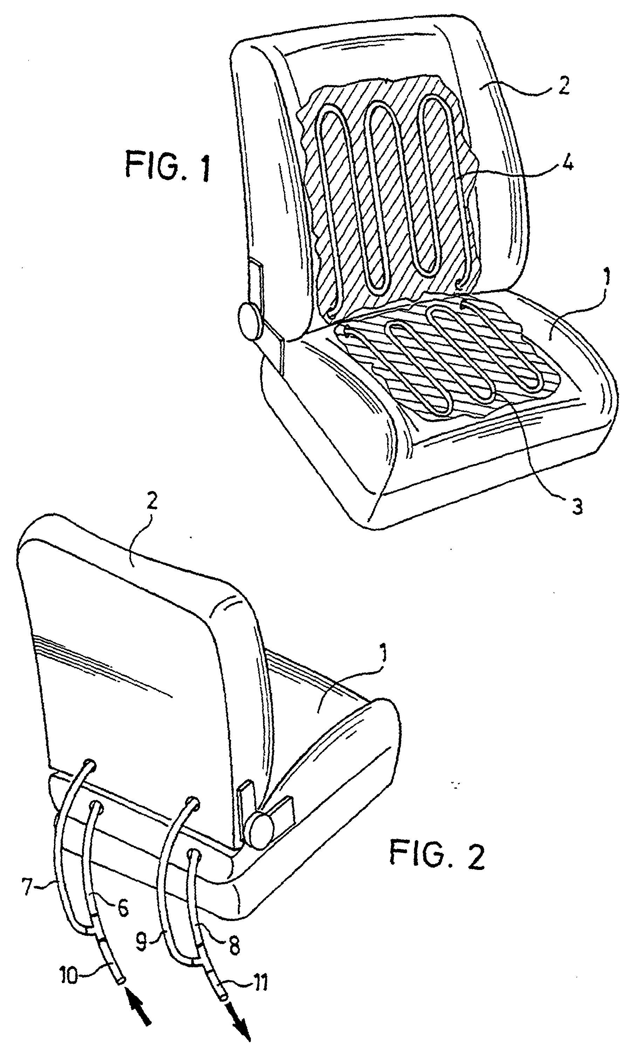

Fig. 1 und 2 zeigen einen in seiner grundsätzlichen Gestalt an sich bekannten Fahrzeugsitz mit einem gepolsterten Sitzteil 1 und einem gepolsterten Lehnenteil 2. Sowohl in das Sitzteil 1 wie in das Lehnenteil 2 sind bei der dargestellten Ausführungsform mäanderformig verlegte Schläuche 3 bzw. 4 unmittelbar unterhalb des Sitzbezugs bzw. des Lehnenbezugs eingebaut, die im Bereich der Schläuche 3 und 4 in Fig. 1 weggebrochen dargestellt sind. Wie aus Fig. 2 hervorgeht sind die Schläuche 3 und 4 mit ihren Zu- und Abflußenden 6, 7 bzw. 8, 9 parallelgeschaltet und jeweils an einen gemeinsamen Zu- bzw. Vorlaufschlauch 10 bzw. Rücklaufschlauch 11 angeschlossen, der an die Sekundärseite eines nicht dargestellten Wärmetauschers angeschlossen ist, der primärseitig mit einem bordeigenen Wärmeerzeuger bzw. Kälteerzeuger bzw. selektiv mit einem Wärmeerzeuger bzw. Kälteerzeuger (ebenfalls nicht gezeigt) verbindbar ist bzw. den Wärmetauscher des entsprechenden Wärmeerzeugers bzw. Kälteerzeugers verwendet, um den Sitz zu kühlen bzw. zu heizen.

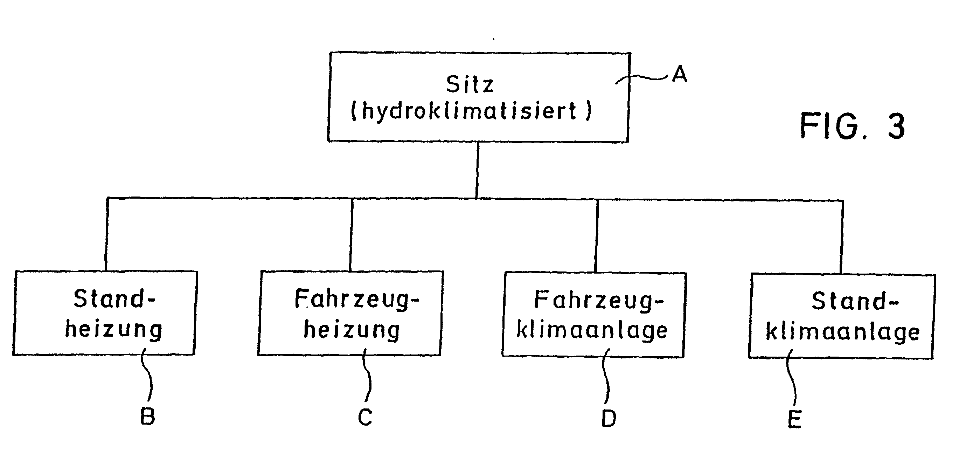

Das Schema des Fluidanschlusses des in Fig. 1 und 2 gezeigten Sitzes geht aus Fig. 3 hervor. Demnach wird der Sitz A wahlweise mit einer Fahrzeugstandheizung bzw. einer Fahrzeugheizung als "Wärmeerzeuger bzw. mit einer Fahrzeugklimaanlage oder einer Standardklimaanlage als Kälteerzeuger, gegebenenfalls unter Vorschaltung eines Wärmetauscher oder unter Verwendung des Wärmetauschers des jeweiligen Wärme- bzw. Kälteerzeugers verbunden, wobei im Fall einer Vollklimatisierung des Fahrzeugsitzes außerdem wahlweise eine Umschaltung zwischen dem Anschluß an den bordeigenen Wärmeerzeuger bzw. den bordeigenen Kälteerzeuger erfolgt.

In einer besonders komfortablen Variante ist der Fahrzeugsitz in die Klimaautomatik des Fahrzeuges derart eingebunden, daß der über einen Innenraumtemperatur-Sollwertgeber durch den Benutzer vorgegebene Wärmebedarf und ein Außentemperaturfühler automatisch für eine Bereitstellung einer behaglichen Sitztemperatur, gegebenenfalls durch Ansteuerung eines Mischventils für Kalt- und Warmwasser, führen.

### Bezugszeichenliste

- **1**: Sitzteil
- **2**: Lehnenteil
- **3**: Schläuche
- **4**: Schläuche
- **6,7**: Zuflußende
- **8,9**: Abflußende
- **10**: Zulaufschlauch
- **11**: Rücklaufschlauch
- **A**: Sitz
- **B**: Standheizung
- **C**: Fahrzeugheizung
- **D**: Fahrzeug-Klimaanlage
- **E**: Stand-Klimaanlage

## Patentansprüche

1. Fahrzeugsitz mit wenigstens einem Heizelement (3, 4), das zur Beheizung des Fahrzeugsitzes (A) an einen mit Wasser als Fluid betriebenen Sekundärkreislauf eines Wärmetauschers anschließbar ist, der primärseitig von wenigstens einer Fahrzeugheizung (C) bzw. Fahrzeug-Standheizung (B) beaufschlagt ist.

2. Fahrzeugsitz mit wenigstens einem kombinierten Heiz/Kühlelement (3, 4), das zur Klimatisierung des Fahrzeugsitzes (A) wahlweise an einen mit Wasser als Fluid betriebenen Sekundärkreislauf eines Wärmetauschers, der primärseitig von wenigstens einer Fahrzeugheizung (C) bzw. Fahrzeug-Standheizung (B) beaufschlagt ist und/oder an einen mit Wasser als Fluid betriebenen Sekundärkreislauf eines Wärmetauschers anschließbar ist, der primärseitig von wenigstens einem bordeigenen Kälteerzeuger (D, E) beaufschlagt ist.

3. Fahrzeugsitz nach Anspruch 1, oder 2, **dadurch gekennzeichnet**, daß das Wasser im Sekundärkreislauf des Wärmetauschers frei von aggressiven bzw. giftigen Zusätzen ist.

4. Fahrzeugsitz nach einem der Ansprüche 1 bis 3, **dadurch gekennzeichnet**, daß eine Einrichtung zum Umschalten zwischen verschiedenen Wärme- bzw. Kälterzeugem vorgesehen ist.

5. Fahrzeugsitz nach Anspruch 2, **dadurch gekennzeichnet**, daß der bordeigene Kälteerzeuger eine Fahrzeug-Klimaanlage (D) ist.

6. Fahrzeugsitz nach Anspruch 2, **dadurch gekennzeichnet**, daß der bordeigene Kälteerzeuger eine Fahrzeug-Standklimaanlage (E) ist.

7. Fahrzeugsitz nach einem der Ansprüche 1 bis 6, **dadurch gekennzeichnet**, daß das Heizelement, bzw. das kombinierte Heiz/Kühlelement (3, 4) an den entsprechenden eigenen Wärmetauscher des jeweiligen Wärme- bzw. Kälteerzeugers (B-E) anschließbar ist.

8. Fahrzeugsitz nach einem der Ansprüche 1 bis 7, **dadurch gekennzeichnet**, daß Sitz (1) und Lehne (2) des Fahrzeugsitzes (A) jeweils wenigstens ein Heiz- bzw. ein kombiniertes Heiz/Kühlelement (3, 4) enthalten.

9. Fahrzeugsitz nach einem der Ansprüche 1 bis 8, **dadurch gekennzeichnet**, daß das Heizelement bzw. das kombinierte Heiz/Kühlelement (3, 4) im wesentlichen mäanderförmig verlegte und vom jeweiligen Fluid durchströmte Schläuche bzw. Rohre aufweist.

10. Fahrzeugsitz nach Anspruch 9, **dadurch gekennzeichnet**, daß die Fluid-Schläuche bzw. -rohre in ein flaches, in etwa kissenförmiges Teil integriert sind, das auf der Unterseite des Sitz- und/oder des Lehnenbezugs des Fahrzeugsitzes (A) in diesen eingebaut ist.

## Claims

1. A vehicle seat with at least one heating element (3, 4) which, for heating the vehicle seat (A) can be connected to a secondary circuit of a heat exchanger and in which the fluid is water, the secondary circuit being on the primary side subject to the action of at least a vehicle heater (C) or stationary vehicle heater (B).

2. A vehicle seat with at least one combined heating/cooling element (3, 4) which, for air conditioning of the vehicle seat (A), can be optionally connected to a water-operated secondary circuit of a heat exchanger the primary side of which is subject to at least a vehicle heater (C) or stationary vehicle heater (B) and/or to a fluid operated secondary circuit of a heat exchanger the primary side of which is subject to at least one inboard refrigeration unit (D, E).

3. A vehicle seat according to claim 1 or 2, **characterised in that** the water in the secondary circuit of the heat exchanger is free from corrosive or toxic additives.

4. A vehicle seat according to one of claims 1 to 3, **characterised in that** a device is provided for switching over between different heating and/or cooling units.

5. A vehicle seat according to claim 2, **characterised in that** the inboard refrigerating unit is a vehicle air conditioning system (D).

6. A vehicle seat according to claim 2, **characterised in that** the inboard refrigerating unit is a stationary vehicle air conditioning system (E).

7. A vehicle seat according to one of claims 1 to 6, **characterised in that** the heating element or the combined heating/cooling element (3, 4) can be connected to the corresponding heat exchanger appropriate for the respective heating or cooling unit (B, E).

8. A vehicle seat according to one of claims 1 to 7, **characterised in that** seat (1) and back rest (2) of the vehicle seat (A) respective contain at least one heating or one combined heating/cooling element (3, 4).

9. A vehicle seat according to one of claims 1 to 8, **characterised in that** the heating element or the combined heating/cooling element (6, 4) comprises tubes or hoses which are laid in a meandering fashion and through which the respective fluid passes.

10. A vehicle seat according to claim 9, **characterised in that** the fluid hoses or tubes are integrated into a flat substantially cushion-like part which is incorporated into the under side of the seat and/or back rest trim of the vehicle seat (A).

## Revendications

1. Siège de véhicule muni d'au moins un élément chauffant (3, 4) pouvant être raccordé, en vue du chauffage dudit siège (A) de véhicule, à un circuit secondaire fonctionnant avec de l'eau en tant que fluide, et faisant partie d'un échangeur thermique respectivement sollicité, côté primaire, par au moins un chauffage (C) du véhicule ou un chauffage permanent (B) dudit véhicule.

2. Siège de véhicule muni d'au moins un élément combiné de chauffage/refroidissement (3, 4) pouvant être sélectivement raccordé, en vue de la climatisation dudit siège (A) de véhicule, à un circuit secondaire fonctionnant avec de l'eau en tant que fluide, et faisant partie d'un échangeur thermique respectivement sollicité, côté primaire, par au moins un chauffage (C) du véhicule ou un chauffage permanent (B) dudit véhicule ; et/ou pouvant être raccordé à un circuit secondaire fonctionnant avec de l'eau en tant que fluide, et faisant partie d'un échangeur thermique sollicité, côté primaire, par au moins un générateur de froid (D, E) embarqué.

3. Siège de véhicule, selon la revendication 1 ou 2, caractérisé par le fait que l'eau, circulant dans le circuit secondaire de l'échangeur thermique, est exempte d'adjuvants respectivement agressifs ou toxiques.

4. Siège de véhicule, selon l'une des revendications 1 à 3, caractérisé par le fait qu'un dispositif est prévu pour assurer la commutation entre différents générateurs respectifs de chaleur ou de froid.

5. Siège de véhicule, selon la revendication 2, caractérisé par le fait que le générateur de froid embarqué est une installation de climatisation (D) du véhicule.

6. Siège de véhicule, selon la revendication 2, caractérisé par le fait que le générateur de froid embarqué est une installation de climatisation permanente (E) du véhicule.

7. Siège de véhicule, selon l'une des revendications 1 à 6, caractérisé par le fait que l'élément chauffant, ou l'élément combiné de chauffage/refroidissement (3, 4), peut être respectivement raccordé au propre échangeur thermique correspondant du générateur de chaleur ou de froid (B-E) considéré.

8. Siège de véhicule, selon l'une des revendications 1 à 7, caractérisé par le fait que l'assise (1) et le dossier (2) dudit siège (A) de véhicule renferment, à chaque fois, au moins un élément chauffant ou un élément combiné de chauffage/refroidissement (3, 4).

9. Siège de véhicule, selon l'une des revendications 1 à 8, caractérisé par le fait que l'élément chauffant, ou l'élément combiné de chauffage/refroidissement (3, 4), présente respectivement des tuyaux ou tubes pour l'essentiel agencés en décrivant des méandres, et parcourus par le fluide considéré.

10. Siège de véhicule, selon la revendication 9, caractérisé par le fait que les tuyaux ou tubes de circulation du fluide sont intégrés, respectivement, dans une pièce aplatie sensiblement configurée en un coussin et incorporée, dans ledit siège (A) de véhicule, sur la face inférieure du revêtement de l'assise et/ou du dossier de ce dernier.
